Europäisches Patentamt

European Patent Office

Office européen des brevets

(19)

(11) Publication number: **0 256 846**
**A2**

(12) **EUROPEAN PATENT APPLICATION**

(21) Application number: **87307129.4**

(22) Date of filing: **12.08.87**

(51) Int. Cl.⁴: **G 01 N 27/62**

(30) Priority: **20.08.86 GB 8620239**
**05.02.87 GB 8702553**

(43) Date of publication of application:
**24.02.88 Bulletin 88/08**

(84) Designated Contracting States:
**AT BE CH DE ES FR GB GR IT LI LU NL SE**

(71) Applicant: **STEWART HUGHES LIMITED**
**Chilworth Manor**
**Southampton Hampshire SO9 1XB (GB)**

(72) Inventor: **Fisher, Celia Elizabeth**
**135 Ramsey Road**
**Shirley Southampton (GB)**

**Forfitt, Roy**
**The Bungalow Brickworth Farm**
**Whiteparish Wiltshire (GB)**

(74) Representative: **Evans, David Charles et al**
**F.J. CLEVELAND & COMPANY 40-43, Chancery Lane**
**London, WC2A 1JQ (GB)**

(54) **Jet engine gas path condition monitoring.**

(57) 1. A sensor assembly for inclusion in the gas path of a gas turbine engine which assembly comprises an electrically conducting surface, having an electrically significant axial extent, mounting means for mounting said surface in the gas path of said engine, electrical insulating means serving to isolate said surface from the body of the engine and conducting means for connecting said surface to monitoring means external of the engine, whereby the presence of electrically charged debris in a gas stream in said path induces a charge on said conducting surface as debris passes for detection by said monitoring means.

EP 0 256 846 A2

## Description

### JET ENGINE GAS PATH CONDITION MONITORING

This invention relates to the condition monitoring of gas turbine engines and has particular reference to the construction of sensors for use in such condition monitoring.

It is well known that when a gas turbine engine, such as pure jet engine, is operating under stress, as for example when the engine experiences a blade rub chafing or a burn, this results in the production of minute particles of debris which are electro-statically charged.

In order to exploit this phenomena, it is necessary to produce sensors capable of collecting signals capable of being processed and interpreted.

According to the present invention, there is provided a sensor assembly for inclusion in the gas path of a gas turbine engine which sensor assembly comprises an electrically conducting surface having an electrically significant axial extent, mounting means for mounting said surface in a gas path of said engine, electrical insulating means serving to isolate said surface from the body of the engine and conducting means for connecting said surface to monitoring means external of the engine, the arrangement being such that in use the presence of electrically charged debris in the gas stream induces a charge on said conducting surface as debris passes for detection by said monitoring means.

The sensor assembly may be an arcuate plate and the insulating means may be a layer of ceramic material provided on the surface thereof. The ceramic material of the arcuate plate may be juxtaposed the internal surface of the exhaust duct. The mounting means may comprise a stud connected with said surface and insulating means carrying said stud to locate the same, and to isolate the stud electrically from said surroundings.

The electrode assembly may be inserted in the gas path of a gas turbine engine by applying an insulating layer to the internal surface of said exhaust duct and applying a metallic layer to the insulating surface. The mounting means in this case may be an adhesive if in a cool environment.

In a specific embodiment of the invention, each sensor may comprise an insulating layer, a bonding layer for bonding said insulating layer to a support surface and a conductive layer carried by said insulating layer, characterised that each of said layers is applied by spraying and in that connecting means provides for connecting said conductive layer with monitoring means externally of the engine assembly.

The spraying may be errected by plasma spraying or by flame spraying.

In a particular embodiment of the present invention, the bonding coat may have a thickness within the range or 0.5 to 1.5 mm, the ceramic layer may have a thickness of 0.5 to 1.6 mm and the conductive layer may have a thickness of 0.01 to 0.05 m.

In a further embodiment of the present invention, the bonding layer may comprise a nickel-chromium alloy containing 6% of aluminium. The ceramic layer may be selected from magnesium zirconate or a composition containing alumina, titanium dioxide, silica and iron oxide. The conductive layer may be selected from, a stainless steel containing by weight 17% chromium and 12% nickel together with to 3.5% of molybdemium and 1.5% silicon, or may be a nickel layer of 99%+ purity.

Each sensor may be formed directly on the engine casing or in the alternative, may be formed on a support plate adapted to be secured to the engine casing. In a particular embodiment of the present invention, the engine casing is recessed to accommodate the sensor so that the sensor surface follows substantially the internal surface of the engine casing.

Sensors in accordance with the present invention may be circumferentially spaced around ducting in the engine, or may be "spot" sensors which may be disposed in a staggered ring around an engine ducting or at other convenient places within the engine for sensing charged particles in the gas flow therein.

The provision of sensors in accordance with the present invention to the internal surface of an engine housing or ducting has resulted in electro-static probes with good performances.

Two parameters determine the performance of each sensor, these are the length of the sensor within the ducting and the overall surface area.

The effect of length of the sensor in the direction of gas flow on the signal shape and duration has shown that the signal amplitude is related to sensor surface area and that charged debris sets up a charged field which is long compared to the change in axial length of the sensor and therefore, the change in signal duration is no discernable. The axial length of the sensor does not, therefore, appear to effect the frequency response of a sensor within a reasonable range of length, but in practical terms it is preferred that the minimum length of any sensor is constrained to approximately 10 mm usually by the problem of the lead out connectors.

The maximum length is limited by the available space and by the capacitance consideration. The surface area should be maximised and the capacitance should be minimised. A compromise has to be achieved as capacitance is proportion to the surface area for the same dielectric material. In maximising the surface area, therefore, the capacitance could increase to an unacceptable level. We have found that a nominal value of 50 mm is a preferred maximum length for a sensor in accordance with the present invention. It will be appreciated, therefore, that the selection of different dielectric materials will enable improved sensor construction. The capacitance of each sensor should be below 2000 picofarads in order to be compatible with the input circuitry of exisiting electronics equipment capable of analysing the signals therefrom.

In selecting the various materials for each of the components of a sensor in accordance with the present invention, the ceramic backing must be suitable for bonding to the sensing layer and the thermal expansion of the material of each layer should be matched as closely as possible to ensure that cracking and material loss does not occur in the relatively vigorous environment of the exhaust duct of a gas turbine engine.

Our investigations have indicated that a compromise has to be effected for the coatings in accordance with the present invention. Thin coatings are more desirable since they are less likely to crack or to be lost from the surface, but they have low resistance and high capacitance compared with thicker coatings. Thicker coatings are more prone to cracking and material loss and coating thicknesses selected as set out above have been found to provide the ranges within which an acceptable compromise between the electrical properties on the one hand and the physical properties on the other are suitable for the particular compsitions selected.

Following is a description by way of example only and with reference to the accompanying drawings of methods of carrying the invention into effect.

In the drawings:-

Figure 1 is a perspective view of a sensor in accordance with the present invention.

Figure 2 is a perspective view of the back of the sensor of Figure 1.

Figure 3 is a section through a mount for the sensor of Figures 1 and 2.

Figure 4 is a perspective view of the exhaust duct of a jet engine showing the installation of sensors in accordance with the present invention.

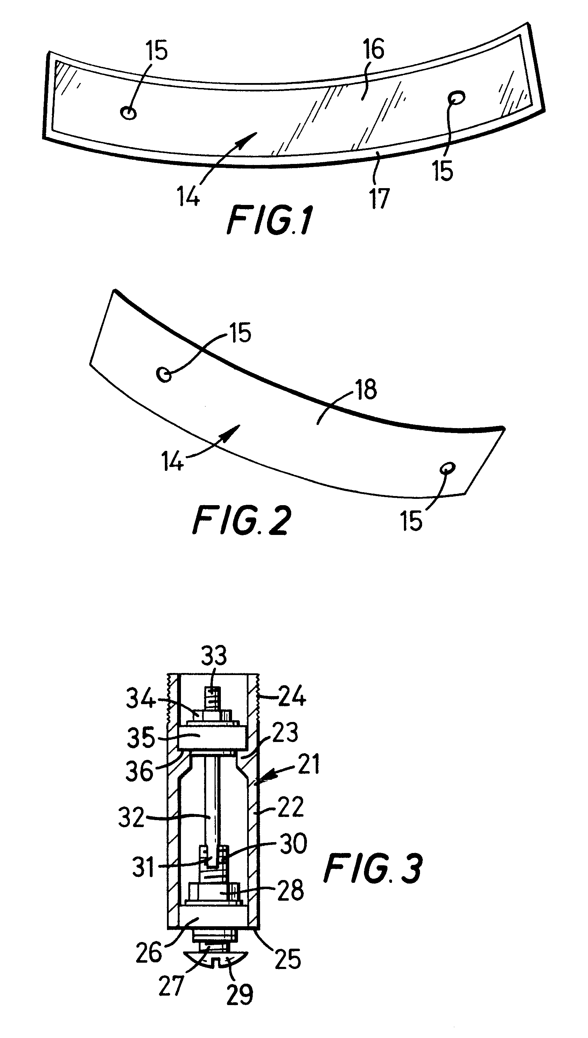

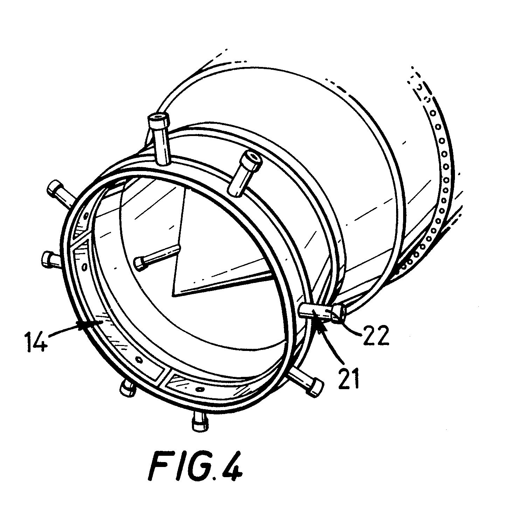

In accordance with the present invention, a typical series of sensors as arranged in the gas duct of a jet engine is shown in Figure 4 and the individual sensors are shown in Figures 1 and 2.

In the particular configuration shown in Figure 4, four arcuate sensors were employed. Each sensor comprises an arcuate plate 14 having a pair of arcuatly spaced holes 15. The face 16 or plate 14 is polished to provide a charge receiving surface and the periphery 17 and the back 18 are covered with a coating of ceramic electrically insulating material.

Each plate 14 is secured to the engine casing 20 by means of a securing stud assembly 21. The securing stud assembly is shown in Figure 3 and comprises a generally cylindrical sleeve 22 which is provided on its internal surface towards a first end with an annulus 23. The external surface of the first end is threaded at 24 and the second end 25 of stud assembly 21 is provided with an annular recess (not shown). The second end is adapted to accommodate an insulating member 26 formed of a ceramic material and having a central bore adapted to accommodate a metal screw 27 adapted to be secured by nut 28 to ceramic member 26.

Bolt 27 is provided with an enlarged slot 30 at its threaded end and is adapted to receive a flatten portion 31 of stud 32. stud 32 is generally cylindrical and is threaded at its first end 33 and is adapted to be engaged by nut 34 which serves to clamp a further ceramic block 35 between the shoulder 36 defined by constriction 23 against ceramic layer 26. The head 29 of bolt 27 serves to retain plate 16 in closely spaced relationship with the casing, but insulated therefrom whilst the bolt 27 and its associated stud serve to provide a means of electrical connection whereby the end 33 can be electrically connected to a conductor for connection to signal sensing and signal analytical equipment..

The sensors described above can be susbstituted by spray on sensors having parameters as set out in the following specific examples:-

EXAMPLE 1

A bond coat composition was made up of a nickel-chromium alloy containing 6% of aluminium. This was sprayed by plasma spray techniques into a jet engine exhaust duct to form four circumferentially spaced arcuate bands on the internal surface of the exhaust duct. The thickness of the coating was 0.1 mm. The coating was allowed to cool and a further coating of a ceramic layer formed of magnesium zirconate containing 24% by weight of magnesium oxide was then sprayed on the bond coat in a thickness of 0.7mm.

An conductive layer composition was prepared of a type 316 stainless steel having a composition of 17% chromium, 125 nickel, 2.5% molybdenium, 1% silicon, 0.1% carbon, the balance apart from incidental impurities being iron, was then plasma sprayed to a thickness of 0.025 mm onto the ceramic coating. An insulated stud connector was connected to the conductive layer and passed through the housing as described in copending application No. 8620239.

Four arcuate sensors were provided by the manner described and the output results compared favourably with the results obtained with the electrodes forming the subject of application no. 8620239 with the additional advantage that the sensor did not intrude significantly into the exhaust gas flow.

EXAMPLE 2

Example 1 was repeated, the bond coat being as used in Example 1. The ceramic on this occasion was a composition comprising 94% by weight of alumina, 2.5% by weight of titanium dioxide, 2% silica and 1% of iron oxide. The ceramic material was plasma sprayed to a thickness of 1.05 mm onto the bond coat and the conductive layer of Example 1 was then applied thereover. Good results were again obtained comparable with the results of Example 1.

EXAMPLE 3

Example 1 was repeated except that the conductive layer was substituted by a layer comprising 99.3% pure nickel, the balance being of incidental impurities. The conductive layer thickness is again 0.025 mm.

In service, the sensors of Example 3 provide a comparable result with the sensors of Examples 1 and 2.

In each case, the coefficient of expansion between the bond coat, the ceramic layer and the conductive layer composition is sufficiently comparible that in the temperature range extent within the exhaust duct of the engine no significant cracking or spooling of the layers was noted.

EXAMPLE 4

Examples 1 to 3 were repeated using flame spraying as opposed to plasma spraying of the sensor. The advantage of using flame spraying was to enable in situ application of the sensors to an exisiting engine without the need to remove the casing. The results obtained with the sensor was found to be substanially identical with the results in each of Examples 1 to 3 above.

**Claims**

1. A sensor assembly for inclusion in the gas path of a gas turbine engine which assembly comprises an electrically conducting surface, having an electrically significant axial extent, mounting means for mounting said surface in the gas path of said engine, electrical insulating means serving to isolate said surface from the body of the engine and conducting means for connecting said surface to monitoring means external of the engine, whereby the presence of electrically charged debris in a gas stream in said path induces a charge on said conducting surface as debris passed for detection by said monitoring means.

2. A sensor assembly claimed in claim 1, characterised having an insulating layer of ceramic material provided on the surface thereof.

3. A sensor as claimed in Claim 2 characterised in that the ceramic material is jutxaposed the internal surfaces of the exhaust duct.

A sensor as claimed in any preceding claim characterised in that mounting means comprises a stud connecting with said surface and insulating means carrying said stud to locate the same and to isolate the stud electrically from said surrounding.

5. A sensor as claimed in any preceding claim characterised in that the insulating layer is applied directly to the internal surface of the engine duct, said insulating layer carrying a conducting layer thereon.

6. A sensor assembly as claimed in Claim 5 characterised in that where the sensor is to be employed in a cool environment the mounting means is an adhesive.

7. A sensor as claimed in any preceding claims characterised by an insulating layer, a bonding layer, bonding said insulating layer to a support surface and a conducting layer carried by said insulating layer further characterised in that each of the layers is supplied by spraying and further characterised in that connecting means is provided for connecting said conductive layer with monitoring means externally of said engine.

8. A sensor as claimed in claim 7 characterised in that the spraying of said layers is effected by means of plasma spraying or by flame spraying.

9. A sensor as claimed in claim 7 or claim 8 characterised in that the bonding coat may have a thickness within the range of 0.5 to 1.5mm the ceramic layer may have a thickness of 0.5 to 1.6mm and the conductive layer may have a thickness of 0.01 to 0.05mm.

10. A sensor as claimed in any one of claim 7 to 9 characterised in that the bonding layer comprises of nickel chromium alloy containing 6% of aluminium.

11. A sensor as claimed in any one claims 7 to 10 characterised in that the ceramic layer is selected from magnesium zircronate or composition containing alumina, titanium dioxide, silica and iron oxide.

12. A sensor as claimed in any one of claims 7 to 11 characterised in that the conductive layer is selected a stainless steel containing by weight 17% chromium and 12% nickel together with 3.5% of molybdenum and 1.5% silicon, or nickel layer or greater than 99% purity.

13. A sensor as claimed in any preceding claim characterised in the electrically significant axial length is within the range of 10mm to 50mm.

0256846

FIG.1

FIG.2

FIG.3

FIG.4